# EUROPÄISCHE PATENTSCHRIFT

(11) **EP 1 163 943 B1**
(45) Veröffentlichungstag und Bekanntmachung des Hinweises auf die Patenterteilung: **21.01.2004**
(21) Anmeldenummer: 01111354.5
(22) Anmeldetag: 09.05.2001
(51) Int. Cl.: B01D 25/21

(54) **Membranfilterplatte für eine Filterpresse sowie Trägerplatte und Membran für eine solche Membranfilterplatte**
Membrane plate for filter presses, supporting plate and membrane for such a membrane plate
Plateau à membrane pour presses à filtrer, plaque de support et membrane pour ledit plateau à membrane

(30) Priorität: 19.05.2000 DE 10024725
(43) Veröffentlichungstag der Anmeldung: 19.12.2001
(73) Patentinhaber: Klinkau GmbH + Co., 87616 Marktoberdorf (Leuterschach) (DE)
(72) Erfinder: Zeller, Johann, 87647 Oberthingau (DE); Seib, Kurt, 87616 Marktoberdorf (DE); Stanik, Reimund, 87616 Marktoberdorf (DE)
(74) Vertreter: Goddar, Heinz J., Dr.

(56) Entgegenhaltungen:
- DE-A- 4 119 166
- DE-A- 4 325 235
- DE-A- 4 415 274
- DE-U- 9 216 298

## Beschreibung

Die Erfindung betrifft eine Membranfilterplatte für eine Filterpresse gemäß dem Oberbegriff des Anspruchs 1. Ferner betrifft die Erfindung eine Trägerplatte sowie eine Membran für einen Einsatz in einer solchen Membranfilterplatte.

Membranfilterplatten für einen Einsatz in Filterpressen sind grundsätzlich bekannt. In der Regel werden mehrere Membranfilterplatten in einer Filterpresse zusammengespannt, so daß zwischen den einzelnen Membranfilterplatten eine Filterkammer entsteht. Über einen Zufluß wird eine Suspension in die Filterkammer gedrückt, die Suspension wird durch ein auf der Membran aufliegendes Filtertuch gedrückt, wobei die Feststoffe durch das Filtertuch in der Filterkammer zurückgehalten werden. Das von Festkörperelementen befreite Filtrat wird über Abflüsse aus dem System herausgeleitet.

Die Membranen können mit einem Druckmittel beaufschlagt werden, so daß sie sich von einem Randbereich der Filterkammer in die Filterkammer und aufeinander zu erstrecken, so daß die während des Filtervorgangs herausgefilterten Festkörperelemente zusammengepreßt und dabei verdichtet werden, so daß ein "Filterkuchen" entsteht.

Da die Membranen im Vergleich zu den Filterplatten in der Regel einem höheren Verschleiß unterworfen sind, sind Membranfilterplatten mit auswechselbaren Membranen eingeführt worden.

Es sind im Stand der Technik unterschiedliche Möglichkeiten für einen lösbaren Anschluß der Membranen an der Filterplatte vorgeschlagen. Üblicherweise wird die Membran mit üblichen Befestigungsmitteln, wie z.B. Schrauben, über den gesamten Randbereich der Membran in üblicherweise gleichmäßigen und geringen Abstände befestigt, wobei häufig zusätzlich ein Leistenelement oder ähnliches im Randbereich der Membran angeordnet ist, um einen gleichmäßigen Befestigungsdruck zu erzeugen.

Solche Systeme erfordern jedoch zum Auswechseln der Membran einen hohen Zeitaufwand, femer sind die zusätzlichen Befestigungsteile kostenintensiv. Es ist daher bereits versucht worden, einfachere Anschlußmöglichkeiten der Membran an die Filterplatte vorzusehen.

Die DE 44 19 865 C1 offenbart eine Membranfilterplatte für eine Filterpresse, wobei eine Membran zum lösbaren Befestigen an der Filterplatte vorgesehen ist. Die Filterplatte weist dabei eine im Randbereich umfangsseitig angeordnete Aufnahmenut auf, und die Membran weist in ihrem Randbereich eine Randleiste auf, die in die Aufnahmenut eingesetzt werden kann. Die Randleiste hat eine geringere Bereite als die Aufnahmenut, so daß beim Einsetzen der Randleiste in die Aufnahmenut ein Aufnahmespalt für eine Klemmleiste gebildet wird.

Nachteilig an dieser Vorrichtung ist, daß ohne weitere spezielle Ausgestaltungen der Randleiste, der Nut und/oder der Klemmleiste immer noch nicht sichergestellt ist, daß die Randleiste nicht aus der Aufnahmenut gedrückt wird, wenn der Bereich zwischen Membran und Filterplatte mit einem Druckmittel beaufschlagt wird, so daß die Membran in den Filterraum gedrückt wird. Bei einem ordnungsgemäßen Betrieb mag dies unter Umständen unproblematisch sein, da die Randleiste mit einer Gegenplatte in der Filterpresse gesichert ist, jedoch kann es insbesondere bei Fehlbedienungen dazu kommen, daß die Membran zu einem Zeitpunkt mit Druck beaufschlagt wird, in dem die Gegenplatte von der Filterplatte abgehoben ist. In diesem Fall würde die Randleiste aus der Aufnahmenut herausgedrückt werden. Insbesondere ist ein Befestigen und Lösen der Membran immer noch relativ aufwendig.

Aus der DE 43 25 235 A1 ist ferner ein Filterelement für ein Kammer-, Membranfilter oder dergleichen sowie ein Verfahren zu seiner Herstellung bekannt, wobei das Filterelement einen Filtermedium-Zuschnitt mit einem Montagerahmen und einen Tragkörper mit einer Montagenut umfaßt, welche in Verlauf und Querschnitt dem Montagerahmen angepaßt ist. Die Druckschrift offenbart verschiedene Querschnittsformen für solch einen Montagerahmen, die auch mittels Elastizitätswirkung hinter einem engeren Nuthals in einem weiteren Nutboden gehalten wird, wobei die Elastizität des Rahmens durch das Material des Rahmens selbst oder aber durch einen Längsschlitz, der Federarme erzeugt, hervorgerufen wird.

Aus der DE 41 19 166 A1 ist ein Filterelement für eine Filterpresse bekannt, das eine Filterplatte mit einer im Querschnitt im wesentlichen rechteckigen Nut umfaßt, in die wiederum eine Membran einer im wesentlichen rechteckigen Randleiste eingesetzt werden kann, wobei die Randleiste senkrecht zu einer Plattenebene in die Nut eingesetzt und in entgegengesetzter Richtung wieder entnommen wird.

Es ist demnach Aufgabe der vorliegenden Erfindung, eine Membranfilterplatte sowie eine Membran und eine Trägerplatte als solche zur Verfügung zu stellen, die ein gegenüber dem Stand der Technik vereinfachtes Auswechseln bzw. Einsetzen der Membran in die Trägerplatte ermöglicht, wobei gleichzeitig sichergestellt ist, daß die Membran sicher mit der Trägerplatte verbunden ist, auch wenn diese mit Druck beaufschlagt wird und nicht durch eine Gegenplatte gesichert ist.

Diese Aufgabe wird durch eine Membranfilterplatte gemäß Anspruch 1 sowie durch eine Membran nach Ansprüche 20 und eine Trägerplatte nach Anspruch 21 gelöst. Die Ansprüche 2 bis 19 betreffen besonders vorteilhafte Ausführungsformen der erfindungsgemäßen Membranfilterplatte.

Erfindungsgemäß ist die Membran mit einer Befestigungsleiste und die Trägerplatte mit einer Befestigungsnut versehen, wobei die Außenkontur der Befestigungsleiste der Membran im wesentlichen der Innenkontur der Befestigungsnut der Trägerplatte entspricht. Die Konturen der Befestigungsleiste und der Befestigungsnut sind dabei so ausgebildet, daß die in die Befestigungsnut eingesetzte Befestigungsleiste nur mittels einer Drehbewegung lösbar ist, bei der eine äußere Randlinie der Befestigungsleiste eine gekrümmte Bahn beschreibt, die von ihrer Betriebsposition in der Befestigungsnut zumindest teilweise nach oben und nach innen verläuft, und die nicht eingesetzte Befestigungsleiste nur durch eine entgegengesetzte Drehbewegung in ihre Betriebsposition in der Befestigungsnut einsetzbar ist. Der Begriff "Drehbewegung" ist in seiner allgemeinsten Definition zu verstehen und umfaßt auch Bewegungen um sich ändernde Drehpunkte und mit sich ändernden Radien, solange die Bewegung zumindest teilweise von einer geradlinigen Bewegung abweicht.

Unter "Betriebsposition" der Befestigungsleiste in der Befestigungsnut ist die Position gemeint, in der die Befestigungsleiste vollständig in der Befestigungsnut eingesetzt sind, so daß die Konturen im wesentlichen aneinander anliegen. Die Filterplatte weist eine Plattenebene auf, wobei die Filterplatte in der Regel symmetrisch zu der Plattenebene ausgebildet ist, wenn auf beiden Seiten eine Membran vorgesehen ist, wobei zwischen den Trägerplatten jeweils eine Filterkammer und zwischen Membran und Trägerplatte eine Druckkammer erzeugt wird. Auf mindestens einer Seite der Filterplatte (bzw. auf beiden Seiten, wenn jeweils eine Membran vorgesehen ist) ist eine Befestigungsnut vorgesehen, die zu einer Oberfläche der Filterplatte für einen Einsatz der Befestigungsleiste geöffnet ist und sich zumindest teilweise senkrecht zur Plattenebene in die Filterplatte erstreckt. Mit "oben" ist die Richtung gemeint, die sich senkrecht zur Plattenebene von einem Boden der Befestigungsnut zu deren Öffnung in der Oberfläche der Trägerplatte erstreckt. Als "unten" ist die entgegengesetzte Richtung definiert. Die Richtungsangaben "außen" und "innen" betreffen Richtungen, die sich normal zu den gerade definierten Richtungen "oben" und "unten" erstrecken, wobei mit "innen" eine Richtung parallel zu der Plattenebene der Filter- bzw. Trägerplatte definiert ist, die sich senkrecht zur Längsausdehnung der Befestigungsleiste erstreckt und von der Befestigungsleiste in Richtung auf den Filterraum bzw. den Druckraum gerichtet ist, während "außen" eine entgegengesetzte Richtung definiert, also senkrecht zur Längsausstreckung der Befestigungsleiste zu einer Außenbegrenzung der Träger- bzw. Filterplatte. Die Richtungsdefinitionen werden nochmals anhand der Figuren im Detail erläutert.

Die erfindungsgemäße Membranfilterplatte hat den Vorteil, daß eine Befestigungsleiste der Membran problemlos mittels eine Drehbewegung in die zugehörige Befestigungsnut der Filterplatte eingesetzt werden kann. Die Befestigungsleiste sitzt dann selbstsichernd in der Befestigungsnut. Ein unbeabsichtigtes Herausdrücken der Befestigungsleiste aus der Befestsigungsnut ist, auch bei Fehlbedienungen, gänzlich ausgeschlossen. Ein Druck auf die Membran in Richtung auf die zugehörige Filterplatte kann nur im Filterbetrieb ausgeübt werden, bei dem zwangsweise mehrere Platte zusammengeschaltet sind, so daß die Befestigungsleiste zusätzlich durch eine Gegenplatte gesichert ist.

Wird jedoch, obwohl sich die Filterpresse nicht im betreffenden Betriebszustand befindet und die Befestigungsleiste nicht durch eine Gegenplatte gesichert ist, aufgrund einer Fehlbedienung die Druckkammer mit einem Druckmittel beaufschlagt, so daß die Membran von der Filterplatte weggedrückt wird, so wird aufgrund der erfindungsgemäßen Konturen der Befestigungsleiste und der Befestigungsnut auf die Befestigungsleiste ein Drehmoment ausgeübt, das einem zum Lösen der Befestigungsleiste notwendigen Drehmoment entgegengerichtet ist. Die Befestigungsleiste wird dadurch nur um so fester in ihre Betriebsposition gedrückt, so daß ein versehentliches Loslösen auch bei Fehlbedienungen ausgeschlossen ist.

Zum beabsichtigten Lösen der Membran wird auf die Befestigungsleiste ein Drehmoment ausgeübt, das dazu führt, daß eine äußere Randlinie der Befestigungsleiste eine gekrümmte Bahn beschreibt, die von ihrer Betriebsposition nach oben und innen verläuft. Eine Entnahme der Befestigungsleiste aus der Befestigungsnut in linearer Richtung ist, im Gegensatz zu den Vorrichtungen des Standes der Technik, nicht möglich.

Bevorzugt weist die Befestigungsleiste einen Rastvorsprung auf, der sich von der Befestigungsleiste in Richtung auf den Druckraum, also nach innen, erstreckt, wobei die Befestigungsnut einen komplementären Rastvorsprung aufweist, der sich auf der Innenseite der Befestigungsnut in entgegengesetzter Richtung nach außen erstreckt, so daß sich die Rastvorsprünge in einer Betriebsposition der Befestigungsleiste hinterschneiden.

Bei einer bevorzugten Ausführungsform erstrecken sich die äußere Wand der Befestigungsnut und die äußere Wand der Befestigungsleiste von einem Boden schräg nach oben und nach außen, wobei der Außenwinkel zur Ebene der Trägerplatte bzw. die Steigung bevorzugt zwischen 30° und 80°, insbesondere zwischen 55° und 65°, liegt. Dadurch wird das Herausdrehen der Befestigungsleiste besonders vereinfacht.

Es ist vorteilhaft, daß die äußere Wand in einem oberen Bereich einen senkrecht zur Plattenebene der Trägerplatte oder schräg nach oben und innen verlaufenden Abschlußbereich aufweist, der zusätzlich verhindert, daß die Befestigungsleiste parallel zur Außenwand in einer linearen Bewegung aus der Befestigungsnut herausgeschoben werden kann. Dieser Abschlußbereich erstreckt sich bevorzugt über 15 bis 35%, insbesondere über 20 bis 25% der Tiefe der Befestigungsnut. Damit wird auch bei leicht elastisch verformbaren Materialien sichergestellt, daß ein geradliniges Herausschieben der Befestigungsleiste aus der Befestigungsnut verhindert wird, gleichzeitig wird jedoch das erfindungsgemäße Herausdrehen der Befestigungsleiste aus der Befestigungsnut nicht behindert.

Bei einer weiteren Ausführungsform ist neben der eben beschriebenen schräg nach oben und außen verlaufenden Außenwand der Befestigungsnut auf der Innenseite der Befestigungsnut ein Rastvorsprung vorgesehen, der auf seiner unteren Seite so ausgebildet ist, daß er eine nach oben und außen verlaufende Fläche aufweist, deren Steigung geringer ist als die Steigung der äußeren Wand der Befestigungsnut. Dadurch wird ebenfalls zusätzlich sichergestellt, daß auch ohne den oben beschriebenen senkrechten Abschlußbereich im oberen Teil der Befestigungsnut ein lineares Herausschieben der Befestigungsleiste aus der Befestigungsnut nicht möglich ist, die Befestigungsleiste also nur erfindungsgemäß in einer Drehrichtung aus der Befestigungsnut entnommen werden kann.

Bei weiteren möglichen Ausführungsformen ist im oberen Teil des äußeren Wandbereichs der Befestigungsnut ein nach innen ragender Einrast-Vorsprung vorgesehen, wobei der obere Teil des äußeren Randbereichs der Befestigungsleiste eine nach innen ragende, komplementäre Einrast-Nut aufweist. Die Einrast-Nut hinterschneidet in einer Betriebsposition den Einrast-Vorsprung der Befestigungs-Nut, so daß die Befestigungsleiste in ihrer Betriebsposition zusätzlich auch gegen eine Drehbewegung gesichert ist. Soll die Befestigungsleiste aus der Befestigungsnut entnommen werden, muß zuerst, beispielsweise mittels eines Werkzeugs, die Einrastung des Einrast-Vorsprungs mit der Einrast-Nut gelöst werden.

Dies wird bevorzugt dadurch erleichtert, daß die Befestigungsleiste eine nach oben offene Ausnehmung aufweist, so daß der mit der Einrast-Nut versehen äußere Bereich der Befestigungsleiste flexibler ist und nach innen eindrückbar ist, so daß der Einrast-Eingriff gelöst werden kann.

Die Membran und die Filterplatte bestehen bevorzugt aus Kunststoff, insbesondere aus Polypropylen (PP), es können jedoch auch andere Materialien eingesetzt werden. Auch ist es möglich, die Membran an sich aus Gummi herzustellen, wobei auch bevorzugt ist, aus Gründen der höheren Steifigkeit und damit des besseren Eingriffs der Befestigungsleiste diese im Randbereich aus Kunststoff, insbesondere aus dem oben genannten Polypropylen, oder aus einem härteren Gummimaterial herzustellen, so daß die Befestigungsleiste härter bzw. steifer wird. Die Gummimembran mit der härteren Befestigungsleiste ist dabei bevorzugt einstückig hergestellt.

Die Befestigungsleiste und/oder die Befestigungsnut ist bevorzugt mit einer Nut zur Aufnahme einer Dichtung versehen, eine besonders bevorzugte Ausführungsform ist jedoch so ausgebildet, daß die Befestigungsleiste und/oder die Befestigungsnut direkt mit einer Dichtung ausgestattet ist. Die Dichtung kann dabei einstückig mit der Befestigungsleiste und/oder der Befestigungsnut ausgebildet sein, wobei die Dichtung bevorzugt aus einem thermoplastischen Elastomer, insbesondere aus Gummi, besteht.

Besonders bevorzugt ist die Dichtung in Form einer Dichtlippe ausgebildet, wobei die Dichtlippe in Richtung auf eine Druckseite hin gebogen ist. Unter "Druckseite" ist die Seite zu verstehen, auf der der höhere Druck zu erwarten ist. Durch die besondere Formgebung der Dichtlippe wird ein besonders hoher Dichteffekt erzielt. Femer ist es, was als Hauptvorteil einer solchen Dichtlippe anzusehen ist, möglich, insbesondere bei Befestigungsleisten und/oder -nuten aus PP, die Dichtung ebenfalls aus PP und einstückig mit der Befestigungsleiste oder -nut herzustellen, ohne Einschränkungen bezüglich der Dichtigkeit hinnehmen zu müssen. Die Befestigungsleiste oder -nut ist daher von Grund auf mit einer Dichtung ausgestattet, so daß beim Einsatz der Membran keinerlei weitere Schritte, wie z.B. Einsetzen einer separaten Dichtung, erforderlich sind. Ferner ist die Herstellung einer einstückigen, aus einem Material hergestellten Membran mit Befestigungsleiste und Dichtung bzw. einer Trägerplatte mit Dichtung extrem kostengünstig.

Bevorzugt ist auch eine Mehrfach-Dichtlippe vorgesehen, die zu mehreren Seiten hin gebogen ist, so daß auch bei wechselnden Druckverhältnissen immer wenigstens eine Dichtlippe in Richtung auf die Druckseite hin gebogen ist.

Die vorliegende Erfindung umfaßt auch isoliert sowohl eine Membran als auch eine Trägerplatte mit den oben erläuterten Merkmalen.

Diese und weitere Merkmale und Vorteile der Erfindung werden anhand der nachfolgenden schematischen Abbildungen, die als Teil-Querschnitts-Abbildungen dargestellt sind, im Detail erläutert. Es zeigen:
- Figur 1: eine erste Ausführungsform einer erfindungsgemäßen Membranfilterplatte, wobei die Membran nicht in der Trägerplatte eingesetzt ist;
- Figur 2: die in Figur 1 gezeigte Ausführungsform, wobei die Membran in einer Zwischenposition beim Einsetzen in die Trägerplatte dargestellt ist;
- Figur 3: eine erfindungsgemäße Membranfilterplatte mit zwei eingesetzten Membranen und einer Gegenplatte;
- Figur 4: die erste Ausführungsform der erfindungsgemäßen Membranfilterplatte, wobei zwei Membranen in die Trägerplatte eingesetzt sind und die Druckräume mit Druck beaufschlagt sind;
- Figur 5: eine zweite Ausführungsform einer erfindungsgemäßen Membranfilterplatte in dem in Figur 1 dargestellten Zustand;
- Figur 6: die in Figur 5 dargestellte zweite Ausführungsform der erfindungsgemäßen Membranfilterplatte mit zwei eingesetzten Membranen;
- Figur 7: eine dritte Ausführungsform einer erfindungsgemäßen Membran;
- Figur 8: eine vierte Ausführungsform einer erfindungsgemäßen Membran;
- Figur 9: eine fünfte Ausführungsform einer erfindungsgemäßen Membran;
- Figur 10: eine sechste Ausführungsform einer erfindungsgemäßen Membran.

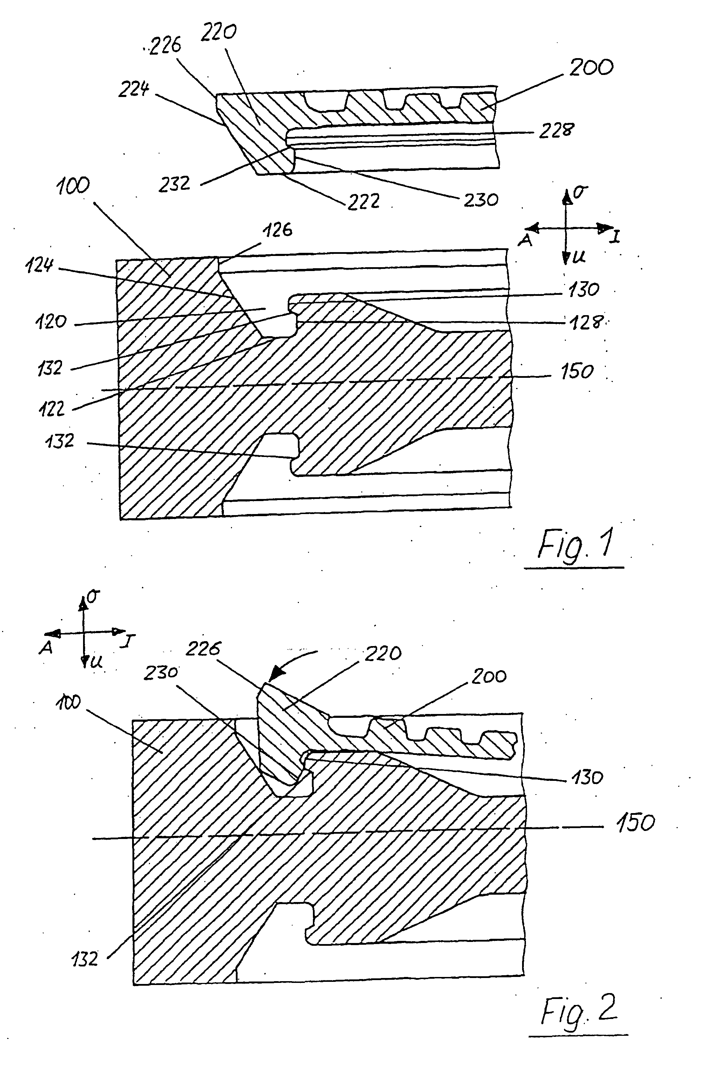

Figur 1 zeigt eine erste Ausführungsform einer erfindungsgemäßen Membranfilterplatte mit einer Trägerplatte 100 und mit einer Membran 200 aus Polypropylen in einer Teil-Querschnitts-Darstellung. Die Trägerplatte 100 weist eine Befestigungsnut 120 auf, während die Membran 200 eine Befestigungsleiste 220 aufweist. Die Innenkontur der Befestigungsnut 120 entspricht im wesentlichen der Außenkontur der Befestigungsleiste 220.

Die Befestigungsnut 120 hat einen im wesentlichen planaren Boden 122, der parallel zu einer Plattenebene 150 der Trägerplatte 100 verläuft. Von diesem Boden 122 erstreckt sich eine äußere Wand 124 der Befestigungsnut 120 schräg nach außen, durch Pfeil A gekennzeichnet, und nach oben, durch Pfeil O gekennzeichnet. Die äußere Wand 124 schließt mit der Plattenebene 150 der Trägerplatte 100 einen Winkel α von 60° ein. Im oberen Teil der äußeren Wand 124 ist ein senkrecht verlaufender Abschlußbereich 126 vorgesehen. Von der inneren Seite des Bodens 122 der Befestigungsnut 120 erstreckt sich eine innere Wand 128 der Befestigungsnut 120 senkrecht nach oben. Daran anschließend ist ein Rast-Vorsprung 130 ausgebildet, der an seiner unteren Seite eine Fläche 132 aufweist, deren Steigung gegenüber der Plattenebene 150 geringer ist als die Steigung der äußeren Wand 124 der Befestigungsnut. Die Steigung der Fläche 132 gegenüber der Plattenebene 150 beträgt 25°.

Die Befestigungsleiste 220 hat eine komplementäre Außenkontur mit einem Boden 222, einer äußeren Wand 224, einem Abschlußbereich 226, einer inneren Wand 228 und einem Rast-Vorsprung 230, der eine Fläche 232 aufweist, deren Steigung geringer ist als die der äußeren Wand 224 der Befestigungsleiste 220.

Figur 2 zeigt, wie die Membran 200 in die Trägerplatte 100 eingesetzt wird. Dabei wird die Befestigungsleiste 220 schräg nach innen gekippt an der Befestigungsnut 120 angesetzt und in Pfeilrichtung in die Befestigungsnut 120 hineingedrückt. Eine äußere Randlinie, die in diesem Falle der oberen oder unteren Kante des Abschlußbereichs 126 entspricht, beschreibt dabei eine gekrümmte Bahn, wobei die äußere Randlinie sich auf dieser gekrümmte Bahn nach außen, Pfeil A, und nach unten, Pfeil U, bewegt.

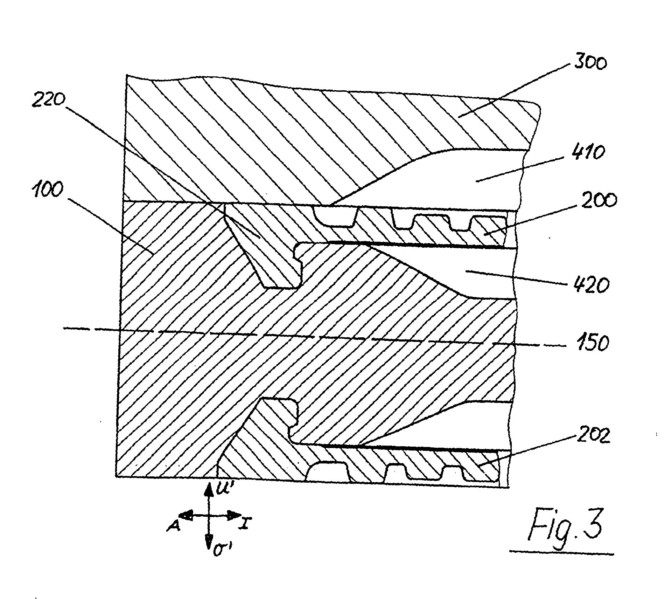

Die Kante der Befestigungsleiste 220 zwischen Boden 222 und äußerer Wand 224 gleitet dabei entlang der äußeren Wand 124 der Befestigungsnut 120, während der Rast-Vorsprung 230 der Befestigungsleiste 220 um den Rast-Vorsprung 130 der Befestigungsnut 120 geführt wird, bis die Membran 200 die in Figur 3 gezeigte Betriebsposition eingenommen hat.

In Figur 3 ist die erste Ausführungsform der Trägerplatte 100 gezeigt, wobei in die Trägerplatte 100 zwei Membranen 200 und 202 eingesetzt sind. Es soll angemerkt werden, daß sich für die zweite Membran 202 auch die Bezugsrichtungen "oben" und "unten" ändern, wie es durch die Pfeile A, O', U', I dargestellt ist.

In der Figur 3 ist ebenfalls eine Gegenplatte 300 dargestellt, die auf die Membranfilterplatte während des Filterbetriebs in der Filterpresse aufgesetzt ist. Dadurch wird ein Filterraum 410 zwischen der Gegenplatte 300 und der Membran 200 und ein Druckraum 420 zwischen der Membran 200 und der Trägerplatte 100 erzeugt. In den Filterraum 410 wird während des Filterbetriebs eine Suspension eingeleitet, die durch ein auf der Membran 200 aufgebrachtes Filtertuch (nicht gezeigt) gedrückt wird, wobei die Feststoffe von dem Filtertuch zurückgehalten werden. Das von den Feststoffen befreite Filtrat wird aus der Vorrichtung abgeleitet, so daß im Filterraum die Feststoffe verbleiben.

Der Druckraum 420 kann mit Druck beaufschlagt werden, wobei die Membran 200 nach oben in den Filterraum 410 gedrückt wird, so daß die herausgefilterten Feststoffe zu einem trockenen Kuchen verpreßt werden.

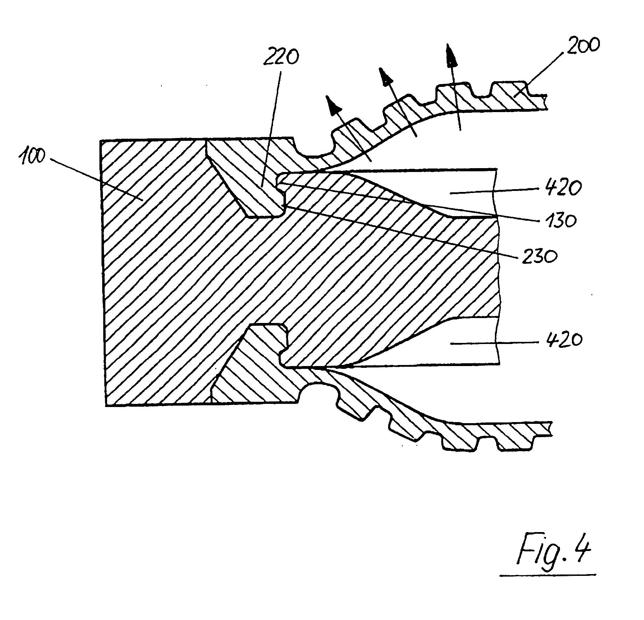

Figur 4 zeigt die erste Ausführungsform der erfindungsgemäßen Membranfilterplatte, wobei der Druckraum 420 mit Druck beaufschlagt ist. Der in Figur 4 gezeigte Zustand tritt bei einer leider häufiger auftretenden Fehlbedienung auf, bei der sich die Filterpresse nicht in einem Filterzustand befindet und die in Figur 3 gezeigte Gegenplatte 300 bereits von der Membranfilterplatte abgehoben ist, der Druckraum 420 aber dennoch mit Druck beaufschlagt wird. Durch den auf die Membran 200 ausgeübten Druck, durch Pfeile gekennzeichnet, wird auf die Befestigungsleiste 220 der Membran 200 ein Drehmoment ausgeübt, das die äußere Wand 224 weiter nach unten drückt. Das Drehmoment ist also so ausgerichtet, daß bestenfalls eine Kreisbewegung in die Betriebsposition unterstützt wird. Eine Kreisbewegung, die zum Lösen der Befestigungsleiste 220 aus der Befestigungsnut 120 notwendig wäre, wird zuverlässig verhindert. Insbesondere wird der Rast-Vorsprung 230 der Befestigungsleiste 220 in eine Position unter den Rast-Vorsprung 130 und damit in eine Hinterschnitt-Position gezwungen, so daß ein Lösen der Befestigungsleiste 220 und der Membran 200 von der Trägerplatte 100 ausgeschlossen ist.

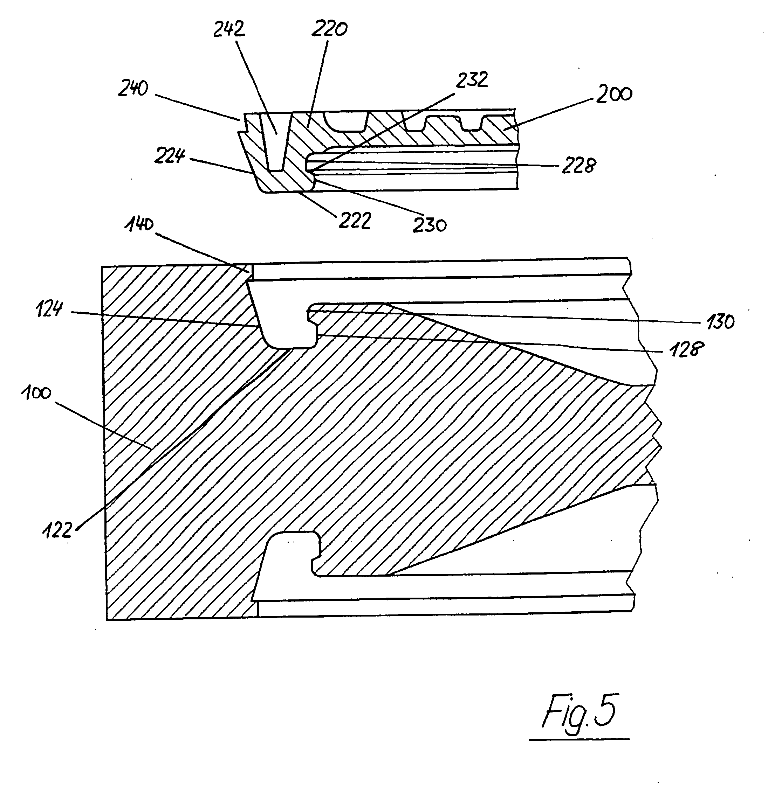

Figur 5 zeigt eine zweite Ausführungsform einer erfindungsgemäßen Membranfilterplatte, die im Grundsatz ähnlich zu der ersten Ausführungsform ausgebildet ist. Gleiche oder ähnliche Elemente sind daher mit identischen Bezugszeichen versehen.

Die Befestigungsnut 120 weist ebenfalls einen Boden 122, eine äußere Wand 124, eine innere Wand 128 und einen Rast-Vorsprung 130 mit einer unteren Fläche 132 auf. Die untere Fläche 132 des Rast-Vorsprungs 130 weist auch hier eine Steigung auf, die geringer ist als die Steigung der äußeren Wand 124. Im Gegensatz zu der äußeren Wand 124 der ersten Ausführungsform ist die Steigung bei der zweiten Ausführungsform größer und beträgt gegenüber der Plattenebene 150 etwa 80%.

Anstelle des in der ersten Ausführungsform vorgesehenen Abschlußbereichs weist die Befestigungsnut 120 am oberen Teil der äußeren Wand 124 einen Einrast-Vorsprung 140 auf.

Die Membran 200 weist eine Befestigungsleiste 220 mit einer komplementären Außenkontur auf, mit einem Boden 222, einer äußeren Wand 224, einer inneren Wand 228 und einem Rast-Vorsprung 230 mit einer Fläche 232, deren Steigung geringer ist als die Steigung der äußeren Wand 224. Ferner weist die Befestigungsleiste 220 eine Einrast-Nut 240 auf, die in der Einrastposition mit dem Einrast-Vorsprung 140 der Befestigungsnut 120 wechselwirkt.

Ferner weist die Befestigungsleiste 220 eine Ausnehmung 242 auf, so daß der in Figur 5 dargestellte linke Bereich der Befestigungsleiste 220 flexibel in die Ausnehmung gedrückt werden kann, so daß die Befestigungsleiste 220 in die Betriebsposition in der Befestigungsnut 120 eingedreht werden kann.

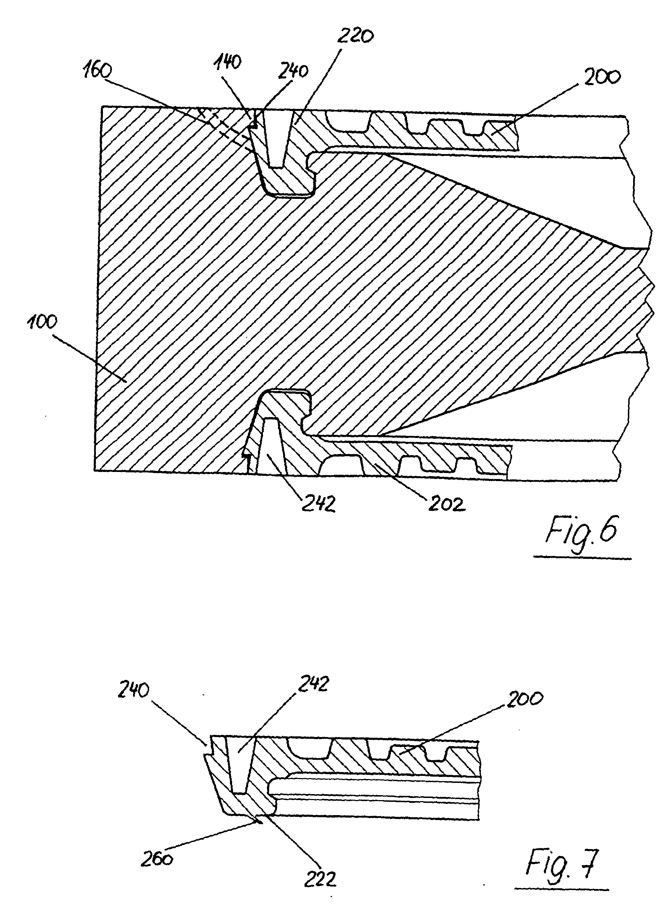

Figur 6 zeigt die zweite Ausführungsform der erfindungsgemäßen Membranfilterplatte mit einer Trägerplatte 100, in die zwei Membranen 200, 202 eingesetzt sind. Die Einrast-Nut 240 der Befestigungsleiste 220 befindet sich mit dem Einrast-Vorsprung 140 der Befestigungsnut 120 in Eingriff, so daß die Befestigungsleiste 220 gegen ein Herausdrehen aus der Befestigungsnut 120 gesichert ist. Diese Ausführungsform umfaßt also eine weitere Sicherungsvorrichtung gegen ein Herausdrehen der Befestigungsleiste 220 aus der Befestigungsnut 120.

Um die Befestigungsleiste 220 aus der Befestigungsnut 120 lösen zu können, muß zuerst der äußere, die Einrast-Nut 240 umfassende Bereich der Befestigungsleiste 220 in die Ausnehmung 242 gedrückt werden, so daß die Einrast-Nut 240 bei der Drehbewegung an dem Einrast-Vorprung 140 der Befestigungsnut vorbeigeführt werden kann. Diese Kraft kann beispielsweise durch ein Werkzeug durchgeführt werden, das zwischen Trägerplatte 100 und Membran 200 gedrückt wird, so daß der äußere Bereich der Befestigungsleiste 220 in die Ausnehmung 242 gedrückt wird. Bei der hier dargestellten Ausführungsform ist jedoch zusätzlich eine Entriegelungs-Öffnung 160 (gestrichelt dargestellt) in die Trägerplatte 100 eingebracht, durch die ein Werkzeug eingeführt werden kann, das den äußeren Bereich der Befestigungsleiste 220 in die Ausnehmung 242 der Befestigungsleiste zum Entriegeln und nachfolgenden Herausdrehen der Befestigungsleiste 220 gedrückt werden kann. Solche Entriegelungs-Öffnungen 160 können in regelmäßigen Abständen verteilt entlang der Befestigungsleiste 220 in die Trägerplatte 100 eingebracht werden.

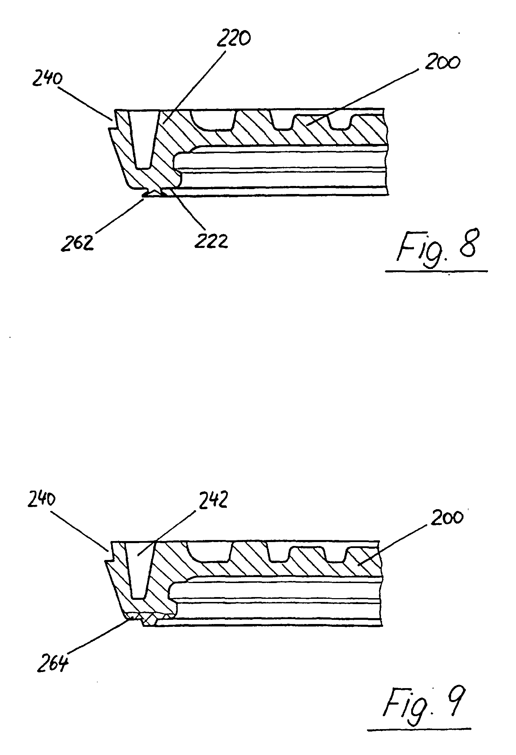

Die Figuren 7 bis 10 zeigen weitere Ausführungsformen der erfindungsgemäßen Membran 200, die alle mit Dichtung versehen sind bzw. Vorrichtung zur Aufnahme einer Dichtung aufweisen.

Besonders vorteilhaft ist die in Figur 7 dargestellte Membran 200, die im wesentlichen identisch mit der in den Figuren 5 und 6 dargestellten Membran 200 ausgebildet ist. Die Befestigungsleiste 220 weist jedoch eine Dichtlippe 260 auf, die sich vom Boden 222 der Befestigungsleiste 220 erstreckt und nach innen zur Druckseite hin gebogen ist. Wie bereits erläutert ist die "Druckseite" die Seite, an der ein erhöhter Druck auftritt bzw. erwartet wird. Der Spalt zwischen Befestigungsleiste 220, der Membran 200 und der Trägerplatte 100 führt in den Druckraum 420 der Membranfilterplatte, in der beim Betrieb die höchsten Drücke auftreten.

Die Dichtlippe 260 ist einstückig mit der Befestigungsleiste 220 und der gesamten Membran 200 aus Polypropylen hergestellt.

Figur 8 zeigt eine weitere Ausführungsform der erfindungsgemäßen Membran 200, wobei eine Befestigungsleiste 220 mit einer Mehrfach-Dichtlippe 262 vorgesehen ist, die sich sowohl nach innen als auch nach außen erstreckt, so daß eine erhöhte Dichtigkeit in allen Richtungen gewährleistet ist. Auch diese Mehrfach-Dichtlippe 262 ist einstückig mit der Membran ausgebildet und das gesamte Bauteil besteht aus Polypropylen.

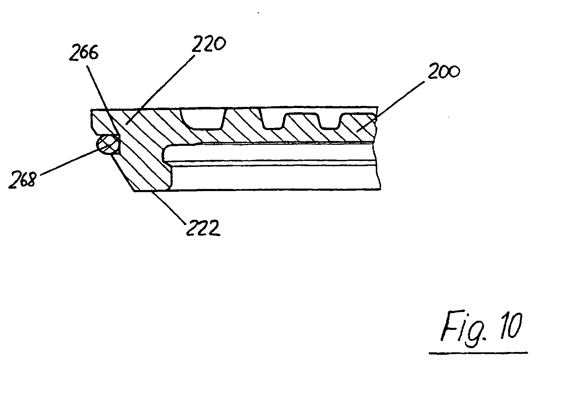

In Figur 9 ist eine weitere Ausführungsform der erfindgungsgemäßen Membran 200 dargestellt, die in ihrem Bodenbereich ein Dichtelement 264 aufweist. Das Dichtelement 264 besteht aus einem thermoplastischen Elastomer, hier Gummi, das direkt an die aus Polypropylen bestehende Befestigungsleiste 220 angegossen ist, so daß es sich auch hier um ein einteiliges Bauelement handelt, so daß beim Einsatz der Membran 200 in die Trägerplatte 100 kein zusätzlicher Arbeitsschritt zum Einsetzen einer Dichtung erforderlich ist.

Figur 10 zeigt eine weitere Ausführungsform einer erfindungsgemäßen Membran 200, die im wesentlichen wie die erste Ausführungsform der erfindungsgemäßen Membran ausgebildet ist. Zusätzlich weist die Befestigungsleiste 220 jedoch eine Nut 266 für eine Dichtung 268 auf, die in die Nut eingesetzt werden kann. Die Dichtung 268 besteht auch hier aus Gummi, während die Membran 200 und die Befestigungsleiste 220 aus Polypropylen (PP) hergestellt sind. Es wird deutlich, daß neben den in den Figuren 1 bis 10 dargestellten Ausführungsformen auch andere Ausgestaltungen insbesondere der Befestigungsleiste 220 und der Befestigungsnut 120 möglich sind, ohne von der Lehre der erfindungsgemäßen Membranfilterplatte abzuweichen. Weiter Ausgestaltungen liegen ohne Probleme im Ermessen des Fachmanns.

Die in den Ansprüchen, der Beschreibung und den Zeichnungen offenbarten Merkmale der Erfindung können sowohl einzeln als auch in Kombination für die Verwirklichung der Erfindung wesentlich sein.

## Patentansprüche

1. Membranfilterplatte für eine Filterpresse mit
- einer Trägerplatte (100),
- wenigstens einer an einer Seite der Trägerplatte (100) angeordneten Membran (200, 202),
- wobei die Membran (200, 202) an ihren Randbereichen eine Befestigungsleiste (220) aufweist und
- die Trägerplatte (100) eine Befestigungsnut (120) aufweist, in die die Befestigungsleiste (220) der Membran (200) in eine Betriebsposition einsetzbar ist,
- so daß die Membran (200, 202) lösbar an der Trägerplatte (100) befestigbar ist,
**dadurch gekennzeichnet, daß**
- die Außenkontur (222, 224, 226, 228, 230, 232) der Befestigungsleiste (220) der Membran (200, 202) im wesentlichen der Innenkontur (122, 124, 126, 128, 130, 132) der Befestigungsnut (120) der Trägerplatte (100) entspricht und
- die Außenkontur (222, 224, 226, 228, 230, 232) der Befestigungsleiste (220) und die Innenkontur (122, 124, 126, 128, 130, 132) der Befestigungsnut (120) so ausgebildet sind, daß die in die Befestigungsnut (120) eingesetzte und sich in der Betriebsposition befindliche Befestigungsleiste (220) nur mittels einer zu einer Plattenebene (150) der Trägerplatte (100) im wesentlichen senkrechten Drehbewegung lösbar ist, bei der eine äußere obere Randlinie der Befestigungsleiste (220) eine gekrümmte Bahn beschreibt, die von ihrer Betriebsposition in der Befestigungsnut (120) zumindest teilweise nach oben und innen in Richtung auf einen Druckraum (420) verläuft, und die nicht eingesetzte Befe-Befestigungsleiste nur durch eine entgegengesetzte Drehbewegung in ihre Betriebsposition in der Befestigungsnut (120) einsetzbar ist,
wobei die Befestigungsleiste (220) auf einer inneren Seite einen Rastvorsprung (230) aufweist, der sich nach innen, in Richtung auf einen Druckraum (420) erstreckt und in der Betriebsposition einen komplementären Rastvorsprung (130) auf der inneren Seite der Befestigungsnut (120) der Trägerplatte hinterschneidet, der sich nach außen erstreckt.

2. Membranfilterplatte nach Anspruch 1 **dadurch gekennzeichnet, daß** ein Boden (122) der Befestigungsnut (120) und ein Boden (222) der Befestigungsleiste (220) im wesentlichen eben ist und sich im wesentlichen parallel zu einer Plattenebene (150) der Trägerplatte (100) erstreckt.

3. Membranfilterplatte nach einem der Ansprüche 1 bis 2, **dadurch gekennzeichnet, daß** eine äußere Wand (124) der Befestigungsnut (120) und eine äußere Wand (224) der Befestigungsleiste (220) sich vom jeweiligen Boden (122, 222) nach oben und nach außen erstreckt.

4. Membranfilterplatte nach Anspruch 3, **dadurch gekennzeichnet, daß** die äußere Wand (124) der Befestigungsnut (120) und die äußere Wand (224) der Befestigungsleiste (220), wenn sich diese in der Betriebsposition befindet, mit der Plattenebene (150) der Trägerplatte (100) einen Außenwinkel von 30° bis 80°, bevorzugt von 55° bis 65° einschließt.

5. Membranfilterplatte nach einem der Ansprüche 3 bis 4, **dadurch gekennzeichnet, daß** die äußere Wand (124) der Befestigungsnut (120) und die äußere Wand (224) der Befestigungsleiste (220) in einem oberen Bereich einen senkrecht zur Plattenebene (150) oder schräg nach oben und innen verlaufenden Abschlußbereich (126, 226) aufweisen.

6. Membranfilterplatte nach Anspruch 5, **dadurch gekennzeichnet, daß** sich der jeweilige Abschlußbereich (126, 226) über 15% bis 35% der Tiefe der Befestigungsnut (120), bevorzugt über 20% bis 25% der Tiefe der Befestigungsnut (120) erstreckt.

7. Membranfilterplatte nach einem der Ansprüche 1 bis 6, **dadurch gekennzeichnet, daß** die Befestigungsnut (120) und die Befestigungsleiste (220) jeweils einen Rast-Vorsprung (130, 230) aufweisen, wobei jeder Rast-Vorsprung (130, 230) eine untere Fläche (132, 232) aufweist, deren Steigung bezüglich der Plattenebene (150) geringer ist als die Steigung der jeweiligen äußeren Wand (124, 224) der Befestigungsnut (120) und der Befestigungsleiste (120).

8. Membranfilterplatte nach einem der Ansprüche 1 bis 7, **dadurch gekennzeichnet, daß** ein äußerer Wandbereich der Befestigungsnut (120) einen nach innen ragenden Einrast-Vorsprung (140) aufweist und der obere Teil eines äußeren Wandbereichs der Befestigungsleiste (220) eine nach innen ragenden Einrast-Nut (240) aufweist, die komplementär zu dem Einrast-Vorsprung (140) der Befestigungsnut ausgebildet ist und in der Betriebsposition mit diesem wechselwirkt.

9. Membranfilterplatte nach Anspruch 8, **dadurch gekennzeichnet, daß** die Befestigungsleiste (220) eine nach oben offene Ausnehmung aufweist, so daß der mit der Einrast-Nut (140) versehene äußere Wandbereich flexibel nach innen eindrückbar ist, so daß der wechselwirkende Eingriff lösbar ist.

10. Membranfilterplatte nach einem der Ansprüche 1 bis 9, **dadurch gekennzeichnet, daß** die Membran (200, 202) und/oder die Trägerplatte (100) und/oder nur die Befestigungsleiste (220) aus Kunststoff bestehen, insbesondere aus Polypropylen (PP).

11. Membranfilterplatte nach einem der Ansprüche 1 bis 10, **dadurch gekennzeichnet, daß** die Befestigungsleiste (220) und/oder die Befestigungsnut (120) eine Nut (266) für eine Dichtung (268) aufweisen.

12. Membranfilterplatte nach einem der Ansprüche 1 bis 11, **dadurch gekennzeichnet, daß** die Befestigungsleiste (220) und/oder die Befestigungsnut (120) mit einer Dichtung (260, 262, 264) ausgestattet sind.

13. Membranfilterplatte nach einem der Ansprüche 1 bis 11, **dadurch gekennzeichnet, daß** die Membran (200) und/oder die Trägerplatte (100) mit einer Dichtung ausgestattet ist, wobei die Dichtung in Richtung auf eine Druckseite der Befestigungsleiste (220) bzw. der Befestigungsnut (120) vorgelagert angeordnet ist.

14. Membranfilterplatte nach Anspruch 12 oder 13, **dadurch gekennzeichnet, daß** die Dichtung (260, 262, 264) einstückig mit der Befestigungsleiste (220) und/oder der Befestigungsnut (120) ausgebildet ist.

15. Membranfilterplatte nach einem der Ansprüche 12 bis 14, **dadurch gekennzeichnet, daß** die Befestigungsleiste (220) und/oder die Befestigungsnut (120) aus Polypropylen (PP) hergestellt sind und die Dichtung (264) aus einem thermoplastischen Elastomer, insbesondere aus Gummi, besteht.

16. Membranfilterplatte nach einem der Ansprüche 14 bis 15, **dadurch gekennzeichnet, daß** die Dichtung an die Befestigungsleiste (220) und/oder der Befestigungsnut (120) angegossen ist.

17. Membranfilterplatte nach einem der Ansprüche 12 bis 16, **dadurch gekennzeichnet, daß** die Dichtung (260, 262) in Form einer Dichtlippe ausgebildet ist.

18. Membranfilterplatte nach Anspruch 17, **dadurch gekennzeichnet, daß** die Dichtlippe (260) in Richtung auf die Druckseite hin gebogen ist.

19. Membranfilterplatte nach einem der Ansprüche 17 bis 18, **dadurch gekennzeichnet, daß** eine Mehrfach-Dichtlippe (262) vorgesehen ist.

20. Membran für eine Membranfilterplatte für eine Filterpresse, wobei die Membran an ihren Randbereichen eine Befestigungsleiste aufweist, die in eine Befestigungsnut einer zugehörigen Trägerplatte in eine Betriebsposition einsetzbar ist, so daß die Membran lösbar an der Trägerplatte befestigbar ist,
**dadurch gekennzeichnet, daß**
- die Außenkontur (222, 224, 226, 228, 230, 232) der Befestigungsleiste (220) der Membran (200, 202) im wesentlichen einer Innenkontur (122, 124, 126, 128, 130, 132) der Befestigungsnut (120) der zugehörigen Trägerplatte (100) entspricht und
- die Außenkontur (222, 224, 226, 228, 230, 232) der Befestigungsleiste (220) so ausgebildet ist, daß die in die Befestigungsnut (120) eingesetzte und sich in der Betriebsposition befindliche Befestigungsleiste (220) nur mittels einer zu einer Plattenebene (150) der Trägerplatte (100) im wesentlichen senkrechten Drehbewegung lösbar ist, bei der eine äußere obere Randlinie der Befestigungsleiste (220) eine gekrümmte Bahn beschreibt, die von ihrer Betriebsposition in der Befestigungsnut (120) zumindest teilweise nach oben und innen in Richtung auf einen Druckraum (420) verläuft, und die nicht eingesetzte Befestigungsleiste nur durch eine entgegengesetzte Drehbewegung in ihre Betriebsposition in der Befestigungsnut (120) einsetzbar ist,
wobei die Befestigungsleiste (220) auf einer inneren Seite einen Rastvorsprung (230) aufweist, der sich nach innen, in Richtung auf einen Druckraum (420) erstreckt und in der Betriebsposition einen komplementären Rastvorsprung (130) auf der inneren Seite der Befestigungsnut (120) der Trägerplatte hinterschneidet, der sich nach außen erstreckt.

21. Trägerplatte für eine Membranfilterplatte für eine Filterpresse, wobei die Trägerplatte eine Befestigungsnut aufweist, in die eine Befestigungsleiste einer zugehörigen Membran nach Anspruch 20 in eine Betriebsposition einsetzbar ist, so daß die Membran lösbar an der Trägerplatte befestigbar ist,
**dadurch gekennzeichnet, daß**
. die Innnenkontur (122, 124, 126, 128, 130, 132) der Befestigungsnut (120) im wesentlichen einer Außenkontur (222, 224, 226, 228, 230, 232) einer Befestigungsleiste (220) einer zugehörigen Membran (200, 210) entspricht und
. die Innenkontur (122, 124, 126, 128, 130, 132) der Befestigungsnut (120) so ausgebildet ist, daß die in die Befestigungsnut (120) eingesetzte und sich in der Betriebsposition befindliche Befestigungsleiste (220) nur mittels einer Drehbewegung lösbar ist, bei der eine äußere obere Randlinie der Befestigungsleiste (220) eine gekrümmte Bahn beschreibt, die von ihrer Betriebsposition in der Befestigungsnut (120) zumindest teilweise nach oben und innen in Richtung auf einen Druckraum (420) verläuft, und die nicht eingesetzte Befestigungsleiste nur durch eine entgegengesetzte Drehbewegung in ihre Betriebsposition in der Befestigungsnut (120) einsetzbar ist,
wobei die Innenkontur einen Rastvorsprung (130) auf der inneren Seite der Befestigungsnut (120) aufweist, der sich nach außen, in Richtung von einem Druckraum weg, erstreckt und bei einer in der Betriebsposition eingesetzten zugehörigen Membran einen komplementären Rastvorsprung (230) auf der inneren Seite der Befestigungsleiste (220) der Membran hinterschneidet, der sich nach innen erstreckt.

## Claims

1. Membrane filter plate for a filter press, having
- a carrier plate (100),
- at least one membrane (200, 202) arranged on one side of the carrier plate (100),
- the membrane (200, 202) having a fastening ridge (220) at its border regions, and
- the carrier plate (100) having a fastening groove (120), into which the fastening ridge (220) of the membrane (200) is insertable into an operating position,
- so that the membrane (200, 202) can be releasably fastened on the carrier plate (100),
**characterized in that**
- the outer contour (222, 224, 226, 228, 230, 232) of the fastening ridge (220) of the membrane (200, 202) essentially corresponds to the inner contour (122, 124, 126, 128, 130, 132) of the fastening groove (120) of the carrier plate (100), and
- the outer contour (222, 224, 226, 228, 230, 232) of the fastening ridge (220) and the inner counter (122, 124, 426, 128, 130, 132) of the fastening groove (120) are designed such that the fastening ridge (220), once inserted into the fastening groove (120) and located in the operating position, can only be released by means of a rotary movement being essentially vertical with respect to a plate plane (150) of the carrier plate (100), in which an outer upper border line of the fastening ridge (220) describes a curved path which runs from the operating position of said ridge in the fastening groove (120) at least partially upwards and inwards in the direction of a pressure chamber (420), and the non-inserted fastening ridge can only be inserted into its operating position in the fastening groove (120) by a rotary movement in the opposite direction,
wherein the fastening ridge (220) has a latching protrusion (230) on an inner side which extends inwards in the direction of a pressure chamber (420) and, in the operating position, undercuts a complementary latching protrusion (130) which is located on the inner side of the fastening groove (120) of the carrier plate and extends outwards.

2. Membrane filter plate according to Claim 1, **characterized in that** a base (122) of the fastening groove (120) and a base (222) of the fastening ridge (220) are essentially planar and extend essentially parallel to a plate plane (150) of the carrier plate (100).

3. Membrane filter plate according to Claim 1 or 2, **characterized in that** an outer wall (124) of the fastening groove (120) and an outer wall (224) of the fastening ridge (220) extend upwards and outwards from the respective base (122, 222).

4. Membrane filter plate according to Claim 3, **characterized in that** the outer wall (124) of the fastening groove (120) and the outer wall (224) of the fastening ridge (220), when the latter is located in the operating position, enclose an exterior angle of from 30° to 80°, preferably from 55° to 65°, with the plate plane (150) of the carrier plate (100).

5. Membrane filter plate according to either of Claims 3 and 4, **characterized in that**, in an upper region, the outer wall (124) of the fastening groove (120) and the outer wall (224) of the fastening ridge (220) have a termination region (126, 226) running perpendicularly to the plate plane (150) or obliquely upwards and inwards.

6. Membrane filter plate according to Claim 5, **characterized in that** the respective termination region (126, 226) extends over 15% to 35% of the depth of the fastening groove (120), preferably over 20% to 25% of the depth of the fastening groove (120).

7. Membrane filter plate according to one of Claims 1 to 6, **characterized in that** the fastening groove (120) and the fastening ridge (220) each have a latching protrusion (130, 230), each latching protrusion (130, 230) having a bottom surface (132, 232) of which the gradient in relation to the plate plane (150) is smaller than the gradient of the respective outer wall (124, 224) of the fastening groove (120) and of the fastening ridge (220).

8. Membrane filter plate according to one of Claims 1 to 7, **characterized in that** an outer wall region of the fastening groove (120) has an inwardly projecting latch-in protrusion (140) and the top part of an outer wall region of the fastening ridge (220) has an inwardly projecting latch-in groove (240) which is designed to complement the latch-in protrusion (140) of the fastening groove and interacts therewith in the operating position.

9. Membrane filter plate according to Claim 8, **characterized in that** the fastening ridge (220) has a cutout which is open at the top, with the result that the outer wall region provided with the latch-in groove (140) can be forced flexibly inwards, with the result that the interacting engagement can be released.

10. Membrane filter plate according to one of Claims 1 to 9, **characterized in that** the membrane (200, 202) and/or the carrier plate (100) and/or just the fastening ridge (220) consist of plastic, in particular of polypropylene (PP).

11. Membrane filter plate according to one of Claims 1 to 10, **characterized in that** the fastening ridge (220) and/or the fastening groove (120) have/has a groove (266) for a seal (268).

12. Membrane filter plate according to one of Claims 1 to 11, **characterized in that** the fastening ridge (220) and/or the fastening groove (120) are/is provided with a seal (260, 262, 264).

13. Membrane filter plate according to one of Claims 1 to 11, **characterized in that** the membrane (200) and/or the carrier plate (100) are/is provided with a seal, the seal being arranged in front of the fastening ridge (220) and/or the fastening groove (120) in the direction of a pressure side.

14. Membrane filter plate according to Claim 12 or 13, **characterized in that** the seal (260, 262, 264) is formed integrally with the fastening ridge (220) and/or the fastening groove (120).

15. Membrane filter plate according to one of Claims 12 to 14, **characterized in that** the fastening ridge (220) and/or the fastening groove (12) are/is produced from polypropylene (PP) and the seal (264) consists of a thermoplastic elastomer, in particular of rubber.

16. Membrane filter plate according to either of Claims 14 and 15, **characterized in that** the seal is moulded onto the fastening ridge (220) and/or the fastening groove (120).

17. Membrane filter plate according to one of Claims 12 to 16, **characterized in that** the seal (260, 262) is designed in the form of a sealing lip.

18. Membrane filter plate according to Claim 17, **characterized in that** the sealing lip (260) is bent in the direction of the pressure side.

19. Membrane filter plate according to either of Claims 17 and 18, **characterized in that** a multiple sealing lip (262) is provided.

20. Membrane for a membrane filter plate for a filter press, the membrane having on its border regions a fastening ridge, which is insertable into an operating position in a fastening groove of an associated carrier plate, so that the membrane can be releasably fastened on the carrier plate,
**characterized in that**
- the outer contour (222, 224, 226, 228, 230, 232) of the fastening ridge (220) of the membrane (200, 202) essentially corresponds to an inner contour (122, 124, 126, 128, 130, 132) of the fastening groove (120) of the associated carrier plate (100), and
- the outer contour (222, 224, 226, 228, 230, 232) of the fastening ridge (220) is designed such that the fastening ridge (220), once inserted into the fastening groove (120) and located in the operating position, can only be released by means of a rotary movement being essentially vertical with respect to a plate plane (150) of the carrier plate (100), in which an outer upper border line of the fastening ridge (220) describes a curved path which runs from the operating position of said ridge in the fastening groove (120) at least partially upwards and inwards in the direction of a pressure chamber (420), and the non-inserted fastening ridge can only be inserted into its operating position in the fastening groove (120) by a rotary movement in the opposite direction, wherein the fastening ridge (220) has a latching protrusion (230) on an inner side which extends inwards in the direction of a pressure chamber (420) and, in the operating position, undercuts a complementary latching protrusion (130) which is located on the inner side of the fastening groove (120) of the carrier plate and extends outwards.

21. Carrier plate for a membrane filter plate for a filter press, the carrier plate having a fastening groove, in which a fastening ridge of an associated membrane according to Claim 20 is insertable into an operating position, so that the membrane can be fastened releasably on the carrier plate,
**characterized in that**
- the inner contour (122, 124, 126, 128, 130, 132) of the fastening groove (120) essentially corresponds to an outer contour (222, 224, 226, 228, 230, 232) of a fastening ridge (220) of an associated membrane (200, 210), and
- the inner contour (122, 124, 126, 128, 130, 132) of the fastening groove (120) is designed such that the fastening ridge (220), once inserted into the fastening groove (120) and located in the operating position, can only be released by means of a rotary movement in which an outer upper border line of the fastening ridge (220) describes a curved path which runs from the operating position of said ridge in the fastening groove (120) at least partially upwards and inwards in direction of a pressure chamber (420), and the non-inserted fastening ridge can only be inserted into its operating position in the fastening groove (120) by a rotary movement in the opposite direction,
wherein the inner contour has a latching protrusion (130) which is located on the inner side of the fastening groove (120) and extends outwards in a direction away from a pressure chamber and which undercuts a complementary latching protrusion (230) which extends inwards and being on the inner side of the fastening groove (220) of an associated membrane inserted in an operating position.

## Revendications

1. Plaque à membrane pour un filtre-presse, comportant :
- une plaque-support (100)
- au moins une membrane (200, 202), disposée sur une face de la plaque-support (100),
- la membrane (200, 202), présentant, sur ses zones de bordure, une bande de fixation (220), et
- la plaque-support (100) présente une rainure de fixation (120), dans laquelle la bande de fixation (220) de la membrane (200) est susceptible d'être insérée, lorsqu'elle est à sa position de fonctionnement,
- de manière que la membrane (200, 202) puisse être fixée de façon désolidarisable sur la plaque-support (100)
**caractérisée en ce que**
- le contour extérieur (222, 224, 226, 228, 230, 232) de la bande de fixation (220) de la membrane (200, 202) correspond essentiellement au contour intérieur (122, 124, 126, 128, 130, 132) de la rainure de fixation (120) de la plaque-support (100), et
- le contour extérieur (222, 224, 226, 228, 230, 232) de la bande de fixation (220) et le contour intérieur (122, 124, 126, 128, 130, 132) de la rainure de fixation (120) sont réalisés de manière que la bande de fixation (220), insérée dans la rainure de fixation (120) et se trouvant à la position de fonctionnement, ne puisse être désolidarisée qu'au moyen d'un mouvement rotatif, sensiblement perpendiculaire à un plan de plaque (150) de la plaque-support (100), mouvement rotatif lors duquel une ligne de bordure supérieure extérieure de la bande de fixation (220) décrit une trajectoire incurvée qui s'étend depuis sa position de fonctionnement dans la rainure de fixation (120), au moins partiellement vers le haut et intérieurement, en direction d'une enceinte à pression (420), et la bande de fixation non insérée ne pouvant être insérée à sa position de fonctionnement dans la rainure de fixation (120) que par un mouvement rotatif en sens opposé,
la bande de fixation (220) présentant, sur une face intérieure, une saillie d'encliquetage (230) qui s'étend vers l'intérieur, en direction d'une enceinte de pression (420) et qui, en position de fonctionnement, coupe par l'arrière une saillie d'encliquetage (130) complémentaire, en face intérieure de la rainure de fixation (120) de la plaque-support, saillie d'encliquetage qui s'étend vers l'extérieur.

2. Plaque à membrane pour un filtre-presse selon la revendication 1, **caractérisée en ce qu'**un fond (122) de la rainure de fixation (120) et un fond (222) de la bande de fixation (220) sont sensiblement plan et s'étendent sensiblement parallèlement à un plan de plaque (150) de la plaque-support (100).

3. Plaque à membrane pour un filtre-presse selon l'une des revendications 1 à 2, **caractérisée en ce qu'**une paroi extérieure (124) de la rainure de fixation (120) et une paroi extérieure (224) de la bande de fixation (220) s'étendent vers le haut et vers l'extérieur depuis le fond (122, 222) respectif.

4. Plaque à membrane pour un filtre-presse selon la revendication 3, **caractérisée en ce que** la paroi extérieure (124) de la rainure de fixation (120) et la paroi extérieure (224) de la bande de fixation (220), lorsque celle-ci se trouve à la position de fonctionnement, font, avec le plan de fond (150) de la plaque-support (100), un angle extérieur d'une valeur de 30° à 80°, de préférence de 55° à 65°.

5. Plaque à membrane pour un filtre-presse selon l'une des revendications 3 à 4, **caractérisée en ce que** la paroi extérieure (124) de la rainure de fixation (120) et la paroi extérieure (224) de la bande de fixation (220) présentent, dans une zone supérieure, une zone de fermeture (126, 226) s'étendant respectivement perpendiculairement par rapport au plan de plaque (150), ou obliquement vers le haut et vers l'intérieur.

6. Plaque à membrane pour un filtre-presse selon la revendication 5, **caractérisée en ce que** la zone de fermeture (126, 226) respective s'étend sur 15 % à 35 % de la profondeur de la rainure de fixation (120), de préférence sur 20 % à 25 % de la profondeur de la rainure de fixation (120).

7. Plaque à membrane pour un filtre-presse selon l'une des revendications 1 à 6, **caractérisée en ce que** la rainure de fixation (120) et la bande de fixation (220) présentent chacune une saillie d'encliquetage (130, 230), chaque saillie d'encliquetage (130, 230) présentant une face inférieure (132, 232), dont l'inclinaison par rapport au plan de plaque (150) est plus faible que l'inclinaison de la paroi extérieure (124, 224) respective, de la rainure de fixation (120) et de la bande de fixation (220).

8. Plaque à membrane pour un filtre-presse selon l'une des revendications 1 à 7, **caractérisée en ce qu'**une zone de paroi extérieure de la rainure de fixation (120) présente une saillie d'encliquetage (140) faisant saillie vers l'intérieur, et la partie supérieure d'une zone de paroi extérieure de la bande de fixation (220) présente une rainure d'encliquetage (240) faisant saillie vers l'intérieur, conformée de façon complémentaire de la saillie d'encliquetage (140) de la rainure de fixation et interagissant avec celle-ci lorsqu'on est à la position de fonctionnement.

9. Plaque à membrane pour un filtre-presse selon la revendication 8, **caractérisée en ce que** la bande de fixation (220) présente un évidement ouvert vers le haut, de sorte que la zone de paroi extérieure, munie de la rainure d'encliquetage (140), est susceptible d'être enfoncée de façon flexible vers l'intérieur, de manière que l'emprise à interaction soit désolidarisable.

10. Plaque à membrane pour un filtre-presse selon l'une des revendications 1 à 9, **caractérisée en ce que** la membrane (200, 202) et/ou la plaque-support (100) et/ou uniquement la bande de fixation (220) sont en matière synthétique, en particulier en polypropylène (PP).

11. Plaque à membrane pour un filtre-presse selon l'une des revendications 1 à 10, **caractérisée en ce que** la bande de fixation (220) et/ou la rainure de fixation (120) présente(nt) une rainure (266) pour un joint d'étanchéité (268) .

12. Plaque à membrane pour un filtre-presse selon l'une des revendications 1 à 11, **caractérisée en ce que** la bande de fixation (220) et/ou la rainure de fixation (120) sont munies d'un joint d'étanchéité (260, 262, 264).

13. Plaque à membrane pour un filtre-presse selon l'une des revendications 1 à 11, **caractérisée en ce que** la membrane (200) et/ou la plaque-support (100) est/sont munie(s) d'un joint d'étanchéité, le joint d'étanchéité étant disposé en avant dans la direction d'une face de pressage de la bande de fixation (220) ou de la rainure de fixation (120).

14. Plaque à membrane pour un filtre-presse selon la revendication 12 ou 13, **caractérisée en ce que** le joint d'étanchéité (260 , 262, 264).est réalisé d'une seule pièce avec la bande de fixation (220) et/ou la rainure de fixation (120).

15. Plaque à membrane pour un filtre-presse selon l'une des revendications 12 à 14, **caractérisée en ce que** la bande de fixation (220) et/ou la rainure de fixation (120) est/sont fabriquée(s) en polypropylène (PP) et le joint d'étanchéité (264) est réalisé en un élastomère thermoplastique, en particulier en caoutchouc.

16. Plaque à membrane pour un filtre-presse selon l'une des revendications 14 à 15, **caractérisée en ce que** le joint d'étanchéité est rapporté par moulage sur la bande de fixation (220) et/ou sur la rainure de fixation (120).

17. Plaque à membrane pour un filtre-presse selon l'une des revendications 12 ou 16, **caractérisée en ce que** le joint d'étanchéité (260, 262) est réalisé à la forme d'une lèvre d'étanchéité.

18. Plaque à membrane pour un filtre-presse selon la revendication 17, **caractérisée en ce que** la lèvre d'étanchéité (260) est coudée en direction de la face de pressage.

19. Plaque à membrane pour un filtre-presse selon l'une des revendications 17 à 18, **caractérisée en ce qu'**est prévue une lèvre d'étanchéité (262) multiple.

20. Membrane pour une plaque à membrane pour un filtre-presse, la membrane présentant, sur ses zones de bordure, une bande de fixation susceptible d'être insérée dans une rainure de fixation d'une plaque-support afférente lorsqu'on se trouve en une position de fonctionnement, de manière que la membrane puisse être fixée de façon désolidarisable sur la plaque-support,
**caractérisée en ce que**
- le contour extérieur (222, 224, 226, 228, 230, 232) de la bande de fixation (220) de la membrane (200, 202) correspond essentiellement à un contour intérieur (122, 124, 126, 128, 130, 132) de la rainure de fixation (120) de la plaque-support (100) afférente, et
- le contour extérieur (222, 224, 226, 228, 230, 232) de la bande de fixation (220) est réalisé de manière que la bande de fixation (220), insérée dans la rainure de fixation (120) et se trouvant à la position de fonctionnement, ne puisse être désolidarisée qu'au moyen d'un mouvement rotatif, sensiblement perpendiculaire à un plan de plaque (150) de la plaque-support (100), mouvement rotatif lors duquel une ligne de bordure supérieure extérieure de la bande de fixation (220) décrit une trajectoire incurvée qui s'étend depuis sa position de fonctionnement dans la rainure de fixation (120), au moins partiellement vers le haut et intérieurement, en direction d'une enceinte à pression (420), et la bande de fixation non insérée ne pouvant être insérée à sa position de fonctionnement dans la rainure de fixation (120) que par un mouvement rotatif en sens opposé,
la bande de fixation (220) présentant, sur une face intérieure, une saillie d'encliquetage (230) qui s'étend vers l'intérieur, en direction d'une enceinte de pression (420) et qui, en position de fonctionnement, coupe par l'arrière une saillie d'encliquetage (130) complémentaire, en face intérieure de la rainure de fixation (120) de la plaque-support, saillie d'encliquetage qui s'étend vers l'extérieur.

21. Plaque-support pour une Plaque à membrane pour un filtre-presse, la plaque-support présentant une rainure de fixation dans laquelle peut être insérée, en une position de fonctionnement, une bande de fixation d'une membrane afférente selon la revendication 20, de manière que la membrane puisse être fixée de façon désolidarisable sur la plaque-support,
**caractérisée en ce que**
- le contour intérieur (122, 124, 126, 128, 130, 132) de la rainure de fixation (120) correspond essentiellement à un contour extérieur (222, 224, 226, 228, 230, 232) d'une bande de fixation (220) d'une membrane afférente,
- le contour intérieur (122, 124, 126, 128, 130, 132) de la rainure de fixation (120) est réalisé de manière que la bande de fixation (220), insérée dans la rainure de fixation (120) et se trouvant à la position de fonctionnement, ne puisse être désolidarisée qu'au moyen d'un mouvement rotatif, lors duquel une ligne de bordure supérieure extérieure de la bande de fixation (220) décrit une trajectoire incurvée qui s'étend depuis sa position de fonctionnement dans la rainure de fixation (120), au moins partiellement vers le haut et intérieurement, en direction d'une enceinte à pression (420), et la bande de fixation non insérée ne pouvant être insérée à sa position de fonctionnement dans la rainure de fixation (120) que par un mouvement rotatif en sens opposé,
où le contour intérieur présente, sur la face intérieure de la rainure de fixation (120), une saillie d'encliquetage (130), qui s'étend vers l'extérieur en s'écartant en une direction partant d'une enceinte de pressage et, dans le cas où une membrane afférente est insérée à la position de fonctionnement, coupe par l'arrière une saillie d'encliquetage (230) complémentaire, sur la face intérieure de la bande de fixation 220 de la membrane, saillie d'encliquetage qui s'étend vers l'intérieur.
